Europäisches Patentamt

European Patent Office

Office européen des brevets

(19)

(11) **EP 0 500 646 B1**

(12) **EUROPEAN PATENT SPECIFICATION**

(45) Date of publication and mention
of the grant of the patent:
**21.08.1996 Bulletin 1996/34**

(21) Application number: **90916519.3**

(22) Date of filing: **13.11.1990**

(51) Int Cl.[6]: **C09J 153/00**, C08F 240/00

(86) International application number:
**PCT/GB90/01749**

(87) International publication number:
**WO 91/07472 (30.05.1991 Gazette 1991/12)**

(54) **RESIN USE FOR TACKIFICATION**

HARZVERWENDUNG ALS KLEBRIGMACHER

RESINE A PROPRIETES TACKIFIANTES

(84) Designated Contracting States:
**DE ES FR GB IT NL SE**

(30) Priority: **14.11.1989 GB 8925685**

(43) Date of publication of application:
**02.09.1992 Bulletin 1992/36**

(73) Proprietor: **EXXON CHEMICAL PATENTS INC.**
**Florham Park New Jersey 07932 (US)**

(72) Inventors:
- **LUVINH, Quoc**
  **B-1080 Brussels (BE)**
- **JACOB, Lutz, Erich**
  **B-3080 Tervuren (BE)**

(74) Representative:
**Veldhuizen, Albert Dirk Willem et al**
**Exxon Chemical Limited**
**Exxon Chemical Technology Centre**
**PO Box 1**
**Abingdon Oxfordshire OX13 6BB (GB)**

(56) References cited:
EP-A- 0 175 593          US-A- 4 037 016
US-A- 4 514 554          US-A- 4 704 110

- **Dialog Information Services, File 350, World
  Patent Index 63-80, Dialog accession no.
  76-94871x/51, NIPPON ZEON KK, "Adhesive
  compsn. contg. styrene butadiene block
  copolymer - with tackifier comprising
  hydrocarbon resin contg. 1,3-pentadiene and
  alpha-methyl styrene units", JP 51125134, A,
  761101, 7651 (Basic)**

Remarks:
The file contains technical information submitted
after the application was filed and not included in this
specification

## Description

### Field of invention

The invention relates to adhesive formulations including these with styrene-butadiene block copolymers and petroleum resins used as tackifier in such for formulations.

The adhesive formulation may be used as a pressure sensitive adhesive including hot melt pressure sensitive adhesive (HMPSA) and be of use particularly in applications such as label stock and tapes.

### Background of the invention

Currently SIS polymer are used for tapes an not the cheaper SBS polymer because SIS can be tackified by $C_5/C_6$ (di)olefin derived resin having an Mw of 1500-200. SBS based formulations have not to date been tackified so as to provide acceptable tack loss upon ageing as SIS.

Tackifier for SBS with relatively low molecular weights prepared by using a Friedel-Crafts catalyst and polymerising a mixture of $C_5/C_6$ (di)olefins and $C_8/C_{10}$ aromatics are disclosed in US-A-4070132 (Lepert) and EP-A-234856 (Evans). The softening points are low in EP-A-234856 (Evans).

In Lepert Example 12 molecular weights and aromaticity are high. However the material does not tackify SBS satisfactorily. Ball tack is 4 to 30 cm and so is too high.

In Evans such high amounts of chain transfer agent (mono-olefins) are used that the softening point is very low. The product will not provide a good adhesive/cohesive performance in SBS blends. The liquid resin serves to substitute the oil in hot melt adhesive (HMA) but cohesive performance is reduced.

Adhesive formulations including styrene-butadiene block copolymers and a hydrocarbon resin containing aliphatic and aromatic units are known from US-A-4 037 016 and JP 5 112 513.

It is the object of the invention to provide an improved adhesive formulation which have good cohesive strength and acceptable loop tack loss upon aging characteristics.

### Summary of the invention

The invention firstly provides an adhesive formulation for hot melt pressure sensitive adhesives including a styrene-butadiene block copolymer and a petroleum resin produced by copolymerising using a Friedel Crafts catalyst, of a mixture comprising

(1) from 40 to 90 wt% of feed comprising C5 olefins and/or diolefins, and/or C6 olefins and/or diolefins;

(2) from 10 to 50 wt% of a feed comprising C8-C10 olefinically unsaturated aromatic compound or compounds, the wt% being calculated on the basis of the total weight of polymerisable feed components,
and having

(a) a level of aromaticity of from 13 to 45 wt% as determined by proton NMR,

(b) a softening point of from 50 to 100°C,

(c) an Mn of from 400 to 900 and an Mz of below 2200 and Mw below 1300 and a ratio of Mw/Mn of from 1.2 to 1.7 as determined by Gel Permeation Chromatography (GPC).

Preferably the adhesive formulation comprises from 100 to 200 parts of resin per 100 parts of styrene-butadiene block copolymer and from 0 to 100 parts of a processing oil per 100 parts of styrene-butadiene block copolymer and especially from 125 to 150 parts of resin per 100 parts of the styrene-butadiene block copolymer and from 25 to 50 parts of a processing oil per 100 parts of the styrene butadiene block copolymer. Advantageously the resin has a softening point of 80 to 90°C. Suitably the copolymer is selected from linear, radial, multiarm tapered copolymers having a styrene content of at least 20 wt%, preferably 25 to 45 wt%.

The invention secondly provides a petroleum resin produced by copolymerising using a Friedel Craft catalyst, of a mixture comprising

(1) from 40 to 90 wt% of a feed comprising C5 olefins and/or diolefins, and/or C6 olefins and/or diolefins;
(2) from 10 to 50 wt% of a feed comprising C8-C10 olefinically unsaturated aromatic compound or compounds, the wt% being calculated on the basis of the total weight of polymerisable feed components and having

(a) a level of aromaticity of from 13 to 45 wt% as determined by proton NMR,

(b) a softening point of from 50 to 100°C,

(c) an Mn of from 400 to 900 and an Mz of below 2200 and Mw below 1300 and a ratio of Mw/Mn of from 1.2 to 1.7 as determined by GPC.

The $C_5$ and/or $C_6$ diolefin and/or olefin containing feed used may be obtained from the cracking of petroleum feedstock. Such feedstocks include naphthas, kerosene, gas oil and vacuum gas oil. These feedstocks usually boil in a range of from 20°C to 550°C.

The petroleum feedstock is cracked, preferably in the presence of steam, and the recommended cracking temperature is between 500°C and 870°C. The product which contains unsaturated hydrocarbons usually boiling in the range of 20°C to 240°C, preferably 20°C to 130°C, generally is thereafter subjected to fractionation to remove $C_2$ to $C_4$ light ends. If the feedstock contains large amounts of cyclopentadiene it should be subjected to thermal soaking at a temperature between 100°C and 160°C, preferably 110°C to 140°C. The thermal soaking preferably takes 0.5 hour to 6 hours, e.g. 0.5 to 3 hours to reduce the level of cyclopentadiene or dicyclopentadiene to below 2 wt%. Low temperature heat soaking is preferred in order to limit the cyclic diene (cyclopentadiene and methylcyclopentadiene) co-dimerisation with $C_5$ linear conjugated dienes (isoprene and pentadienes 1,3 cis- and trans-). After fractionation and, if carried out, thermal soaking, the feedstock is preferably subjected to distillation to remove cyclic conjugated diolefins which are gel precursors (cyclopentadiene and methylcyclopentadiene being removed as dimers).

After distillation one obtains an overhead naphtha which usually boils in the range from 15°C to 100°C, e.g. 25°C to 80°C, the best results being achieved with 25-70°C cut. This overhead naphtha comprises mainly $C_5$ diolefins such as isoprene and 1,3 cis- and transpentadienes (piperylene), $C_5$ to $C_6$ mono-olefins and aromatics, for example, benzene. In general the overhead naphthas have the following compositions:

|  | % By Weight |
|---|---|
| Total paraffins | 1.0 to 41.5 |
| Total diolefins | 50.0 to 14.5 |
| Total olefins | 33.5 to 13.0 |
| Total aromatics | 20.0 to 35.0 |
| Isoprene | 16.5 to 6.5 |
| Pentadiene 1,3 | 15.5 to 4.5 |

The exact composition depending on the nature of the petroleum feedstock which is subjected to steam cracking. Cyclopentene contents are generally below 3.0 wt%. These feeds contain materials such as paraffins and aromatics which are not polymerised during the process of the invention and it is emphasized that these materials are not considered to be part of the reaction mixture for the purposes of this invention.

The feed could be significantly isoprene-free provided this compound is previously recovered through any conventional separation process such as distillation, extractive distillation or azeotropic distillation. In this case, the feed may be a narrow fraction pentadiene 1,3 concentrate. A typical such composition contains less than 5 wt%, preferably less than 2 wt% isoprene, from 25 to 80 wt% pentadiene 1,3 (cis- and transisomer). Other $C_5$ and/or $C_6$ olefins, and/or diolefins make up the remainder, generally cyclopentene, typically 75 to 10 wt%.

The $C_5/C_6$ feed comprises preferably up to 70 wt% of the total unsaturated materials in the process of the present invention.

The olefinically unsaturated aromatic compounds useful in the present invention may also be used in its pure form or as mixtures of unsaturated aromatics such as those available from the cracking of petroleum materials. Examples of suitable unsaturated aromatics include styrene, -methyl styrene, indene and vinyl toluene and mixtures thereof. Here again, where mixtures are used, reference to the percentage is to the amount of unsaturated polymerisable aromatic material based fed to the reactor. We prefer to use from 10 to 45 % of the unsaturated aromatic compound.

Olefinically unsaturated aromatic compound as from heart cut distillate (HCD) obtained by fractionation can also be used. Its typical composition is Table 1 :

Table 1 :

| Total vinylaromatics | 50 wt % |
|---|---|
| Dicyclopentadiene (DCPD) | 1 wt % |
| Higher boiling point than naphtalene (not identified) | 15 wt % |

Table 1 :   (continued)

| Dihydro + tetrahydro DCPD | 8 wt % |
|---|---|
| Non polymerizable aromatics | balance |

Agents to narrow the molecular weight distribution may be employed in the production of the resins, for example, the branched chain reactive aliphatic olefins of our GB patent 1538057 for example those obtained by steam cracking may be used to achieve narrow distribution. These olefins may make up part, preferably 10-50 wt% especially 20-40 wt%, of the $C_5/C_6$ feed and the amount of branched olefins used may be varied to obtain resins of any desired softening point within the range 50°C to 100°C. We prefer to use up to 50 wt% based on the total weight of unsaturated compounds of these olefins. Where branched olefins are used, a broad (e.g. $C_5$-$C_8$) fraction of our U.K. patent 1538057 may be used. The preferred branched chain reactive aliphatic olefins are oligomers of propylene and butylenes obtained with phosphoric acid catalyst or from a Fluid Catalytic cracker.

Other chain transfer agents such as the alkyl halides of our U.K. patent 1537852 may also be used optionally as part of the catalyst system.

Similarly, oxygenated transfer agents may be used such as mono-, di- or tri-substituted phenols, the substitution being a $C_1$ to $C_{30}$ or preferably $C_1$ to $C_6$ straight chain or branched chain hydrocarbyl group, e.g. methyl, ethyl, propyl, butyl, amyl or their secondary or tertiary isomers (e.g. 2,6 ditertiary-butyl-4-methyl phenol), alcohols, esters, dialkyl ethers, alkaryl ethers, the alkyl group in the ether being $C_1$ to $C_6$ straight or branched chain hydrocarbyl group, e.g. methyl, ethyl, amyl or their secondary or tertiary isomers, (e.g. anisole), organic acids or anhydrides (e.g. maleic anhydride). When used, the oxygenated transfer agent should preferably have a boiling point lower than 300°. If low boiling point compounds, e.g. diethyl ether, are used, the polymerisation temperature and pressure should be carefully chosen so as to maintain them in the liquid state.

The most efficient compounds in the presence of $AlCl_3$ are dialkyl ethers or an alkaryl ether, such as anisole, since they act as solvents for the catalysts. Since the polymerisation is usually carried out between 30°C to 80°C, any such additive should be of adequate boiling point in order to maintain it in the liquid phase.

The amount of oxygenated compound used as transfer agent can vary from 0.1 to 5 wt%, preferably 0.5 to2 wt%, based on the weight of petroleum resin feed. They are generally less attractive than the branched chain reactive aliphatic olefins previously described. The feeds are mixed and polymerised using a Friedel Crafts catalyst, for example, aluminium chloride, aluminium bromide or an aluminium chloride/hydrochloric acid/aromatic hydrocarbon complex or aluminium chloride/alkyl halide/aromatic hydrocarbon complex, the aromatic hydrocarbon being preferably alkyl substituted, for example, 0-xylene, mesitylene, ethyl benzene, isopropyl benzene and other short or long chain mono-, di- or tri-alkyl benzenes are especially suitable. The alkyl chain can be linear or branched and can vary from 1 to 30 carbon atoms.

Acid liquid $AlCl_3$ sludges obtained as by-products during the alkylation of benzene or any other substituted aromatics (e.g. toluene or xylene) with branched chain olefins can be directly used as catalyst for the above described polymerisation process. The branched chain olefins which are, for example, produced via the boron trifluoride oligomerisation of propylene and fractionation, e.g. $C_{12}$ olefins or C24 olefins, can be alkylated with aromatics producing in situ sludge. As an example, the acidic sludge available from a dodecylbenzene plant provided similar results to the preformed 0-xylene $AlCl_3$/HCl liquid complex. Sludges from other substituted branched or straight chain aromatic production, for example, meta and/or para di-isopropyl benzenes and para-tertiary butyl benzene may also be used.

In the polymerisation process, the amount of catalyst may vary from 0.25 to 3.0 wt%, preferably 0.5 to 1.5 wt% based on the weight of the mixture to be polymerised. The optimum concentration depends on the nature of the solvent which affects the solubility of the catalyst as well as on the stirring efficiency inside the polymerisation reactor.

Other Friedel Crafts catalysts like titanium tri- or tetrachloride, tin tetrachloride, boron trifluoride, boron trifluoride complexes with organic ethers, phenols or acids can also be used but they lead to rather low resin yields and large quantities of liquid oligomers of low value are obtained. Even though these oily oligomers can be upgraded as reactive plasticizer or liquid plasticizer, such catalysts are not recommended. Other possible catalysts can be acidic clays.

Usual polymerisation temperatures are between -20°C and 100°C, preferably between 30°C and 80°C, we find that if lower temperatures are used, the resin colour is improved although there can be a reduction in yield.

After polymerisation, the residual catalyst may be removed by, for example, washing with aqueous solution of alkali, ammonia or sodium carbonate, or by the addition of an alcohol such as methanol and subsequent filtration.

The final resin may be stripped of unreacted hydrocarbons ("raffinate" rich in benzene and/or paraffins/unreactive olefins) and low molecular weight oligomers by stream stripping or vacuum distillation. The finished resin usually has a higher softening point.

The resins prepared as described above contain both aromatic and aliphatic unsaturation and may be hydrogenated to remove color but whilst avoiding reduction in aromatic unsaturation as far as practicable. The hydrogenation may be batch or continuous. Typical examples of catalysts include nickel, palladium, platinum and molybdenum sulphide Ni-W, Ni-Mo, Co-Mo catalysts with a preferred catalyst being a pre-activated catalyst on a support such as alumina, kieselguhr, activated charcoal, silica, silica alumina and titania.

A hydrogenation process may be used in which a solution of the resin in a suitable hydrocarbon solvent is passed with an excess of hydrogen or hydrogen rich gas over a catalyst.

After hydrotreating, the mixture from the reactor may be flashed and further separated to recover the solvent and hydrogen for recycle and to recover the hydrogenated resin. The solution is flashed and/or distilled in an oxygen-free or minimum oxygen atmosphere to eliminate the solvent, and thereafter, may be steam distilled to eliminate the possible light oily polymers of low molecular weight, known in the trade by name of "fill", preferably with care not to raise the temperature of the resin above 325 °C to avoid degrading the colour and other properties of the finished resin.

The polymeric resin can be flaked when the softening point lies above 80°C as is preferred.

Resins are thus obtained generally having a Gardner colour in the region of 8 down to a Saybolt colour of 30, a ball-ring softening point of 50 to 100°C and a high degree of tackiness. These properties enable them to be used for PSA adhesive formulations with SBS, including HMPSA.

The resin so produced can be blended with SBS polymer to give a PSA with good cohesive properties, reduced tack loss upon aging at an economic cost.

Examples

Table 2 shows feed stream compositions used for making five resins, the relevant reaction parameters and resulting resin properties.

The reactor feed was mixed with a paraffinic solvent in the proportions set out in Table 2. The mixture was then polymerised at 60 °C using 1 wt % $AlCl_3$ as catalyst. The conditions used were as follows :

The reaction mixture (as described in Table 2) was fed to a 2 litres glass reactor which was fitted with a mechanical stirrer, a cooler and a catalyst injection device. 1 wt% of powdered $AlCl_3$ as catalyst based on the total weight of the feed was injected into the reactor which was then held at 50-60°C for 90 minutes. An ammonia solution was added to stop the reaction after the desired reaction time. The resin was then obtained after steam-stripping at 250°C under nitrogen atmosphere.

Table 2 :

| | COMPARATIVE | | ACCORDING TO INVENTION | | |
|---|---|---|---|---|---|
| Sample | 1 | 2 | 3 | 4 | 5 |
| Feed compositions | | | | | |
| -Steam cracker derived olefin | 23.5 | 30 | 30 | 42 | 30 |
| -Heart cut distillate | 37.5 | 46 | 23 | 24 | 23 |
| -$C_5$ diolefin/ olefin with final boiling point of 70 °C (piperylene concentrate) | 18 | 10 | 24 | 14.5 | - |
| -light virgin naphtha | 21 | 14 | 23 | 19.5 | 23 |
| Total polymerisable | 53 | 54.5 | 55 | 55.5 | 54.5 |
| Results | | | | | |
| Resin yield | 38.5 | 38 | 36.5 | 28 | 30.5 |
| Fill yield (oligomers) | 16 | 18.5 | 11.5 | 14 | 14 |
| Softening point (°C) | 92 | 88 | 88 | 83 | 82 |
| Gardner colour | 7 | 8 | 6.5 | 7- | 7- |

Table 2 :   (continued)

| Sample | COMPARATIVE | | ACCORDING TO INVENTION | | |
|---|---|---|---|---|---|
| | 1 | 2 | 3 | 4 | 5 |
| Feed compositions | | | | | |
| Results | | | | | |
| Aromatic content wt% by NMR* | 46.2 | 53.2 | 30.8 | 34.3 | 32.2 |
| Mn (GPC) | 730 | 620 | 775 | 690 | 785 |
| Mw (GPC) | 1100 | 860 | 1135 | 910 | 1160 |
| Mz (GPC) | 2000 | 1420 | 1860 | 1330 | 2060 |
| Mw/Mn | 1.5 | 1.4 | 1.5 | 1.3 | 1.5 |
| | Note high aromaticity and compare looptack loss upon aging in Table | | Combine relatively high softening point, aromaticity in the correct range, low Gardner, low molecular weight | | |

The steam cracker derived olefin had a typical composition as set out in Table 3.

Table 3:

| Typical composition of Steam-Cracker olefins | |
|---|---|
| Total $C_5$ and $C_6$ olefins | 70 wt% |
| Total $C_5$ and $C_6$ diolefins | 1 wt% |
| Total aromatics | 1 wt% |
| Total saturates (paraffinic) | balance |
| Typical $C_5$ olefins : | |
| 2-MeButene-2 | 19 wt% |
| Cyclopentene | 12 wt% |

The HCD portion had a composition as set out previously in Table 1.

The $C_5$ diolefin/olefin was a piperylene concentrate having a typical composition as set out in Table 4.

<u>Table 4</u>

| | |
|---|---|
| Isoprene | 1.17 |
| Pentene-2 trans. | 1.6 |
| Pentene-2 cis. | 3.45 |
| 2 Me-butene-2 | 3.59 |
| Pentadiene 1,3 trans. | 43.36 |
| CPD | 0.59 |
| Pentadiene 1,3 cis. | 23.55 |
| 1,2 dimethylbutane | 0.38 |
| Cyclopentane | 14.99 |
| 4 methylpentene-1 ) | |
| ) | 0.56 |
| 3 methylpentene-1 ) | |
| 3 methylpentadiene 1,4 ) | |
| 4 methylpentadiene-2 cis. ) | 0.17 |
| 2,3 dimethylbutene-1 ) | |
| Cyclopentane | 1.58 |
| 4 methylpentene 2 | 0.06 |
| 2 methylpentane | 0.22 |
| 3 methylpentane | 0.03 |

The light virgin naphtha had the composition set in Table 5.

Table 5 :

| Typical Composition of LVN (Light Virgin Naphta) solvent | |
|---|---|
| Total $C_5$ and $C_6$ saturates (paraffinic) | $\geq$ 97 wt% |
| Aromatics | $\leq$ 0.5 wt% |
| Diolefins, olefins | balance |

The softening point was determined by ring and ball ASTM E-28). The GPC related data in the description and claims on Mn, Mw, Mz and Mw/Mn were calculated after measurements according to the following description.

GEL PERMEATION CHROMATOGRAPHY METHOD USED

Resins are run on a GPC 201 Waters instrument equipped with four ultrastyragel columns. These columns are filled with a porous gel having pore sizes ranging from $10^4$ down to 100 Angstroms and a resolving power higher than that of microstyragel.

The set of ultrastyragel columns was calibrated with polystyrene standards to obtain the "universal" calibration. With each sample a reference (sulfur) is injected to take into account the small variations of flow-rate of the pump. Elution time of sulfur is always assumed to be 100 and the calibration is expressed in terms of reduced elution time $\theta$ = 100 t/ts where t is the elution time of species M and ts is the elution time of sulfur.

For polystyrene following calibration equation was obtained :

$$Ln\ M = 53.4459 - 1.79226\theta + 0.0254066\theta^2 - 0.133993E - \theta^3$$

From this relationship, the "universal" calibration equation is deduced :

$$Ln\ M\ (n) = -8.8457 + 1.713\ Ln\ M$$

$$= 82.7071 - 3.07014\theta + 0.0435215\theta^2 - 229529E - 3\theta^3$$

The calibration for the resins described in this patent was established by using 15 reference samples characterized by their number average molecular weight and intrinsic viscosity.

Following calibration equation was thus obtained :

$$Ln\ M = 62.6837 - 2.24478\theta + 0.323598\theta^2 - 0.166704E - 3\theta^3$$

*Determination of the aromaticity of resins

A solution is made up of a known quantity of the resin (approximately 100 mg) and of a known quantity of internal standards in carbontetra-chloride. Of this solution 0.5 ml is taken, deuteroform is added and the quantitative $^1$H-NMR-spectrum is run.

The integration of the aromatic region (between 8 and 6,4 ppm) is then compared with the integration of the internal standard.

Based on the number of protons involved in the different areas for the aromatic area :

styrene : 5
alpha-methylstyrene : 5
bisubstituted aromatics : 4

the weights of the compounds, and the molecular weights of the monomer-units and the internal standard, the weightpercentage of aromatic functional groups can be determined.

Table 6 shows different formulations of a commercial SBS (Cariflex 1102 Registered Trade Mark) with different resins and the resulting PSA properties. For comparative purposes a SIS (styrene-isoporene-styrene) block copolymer material is also included which is known to have low tack loss upon ageing.

It can be seen that the resins blended with SBS gave adequate looptack ageing so supporting the conclusion that these formulations are an economic replacement of SIS based formulations.

Table 6

|  | A | B | C | D |
|---|---|---|---|---|
| Cariflex TR 1102 (SBS) | 100 | 100 | 100 | - |
| Cariflex | - | - | - | 100 |
| Resin 1 in Table 2 | 125 | - | - | - |
| Resin 2 | - | 125 | - | - |
| Resin 3 | - | - | 125 | - |
| Escorez 1310 | - | - | - | 125 |
| Flexon 876 | 25 | 25 | 25 | 25 |
| Irganox 1076 | - | - | - | 1 |
| Irganox 1010 | 1 | 1 | 1 | - |
| Coating on mylar; 23g/m$^2$; release STS 3390 |  |  |  |  |
| **PSA Properties - Initial** |  |  |  |  |
| 180 peel strength (N/cm) PSTC-1 | 5,7 | 5,0 | 5,5 | 6,0 |
| loop tack (N/25mm) FTM-9 | 12,7 | 10,0 | 18,6 | 14,5 |
| ball tack (cm) PSTC-6 shear-RT (hours) PSTC-7 | 2 | 3 | 2 | 1,5 |
| steel 25mm*25mm | >150 | >150 | >150 | >150 |
| hot shear (min/C) | 10/60 | 30/50 | 4/70 | 8/60 |
| saft (C) | 70 | 66 | 77 cf | 85 |
| blend viscosity at 175°C | 37100 | 36000 | 39400 | 56600 |

Table 6   (continued)

| | A | B | C | D |
|---|---|---|---|---|
| **Open Air aging: loop tack (N/25mm) FIM-9** | | | | |
| Initial | 12,7 | 10,0 | 15,6 | 14,5 |
| After 3 days | - | - | 15,9 | - |
| After 5 days | 9,2 | 7,6 | - | 15,8 |
| After 7 days | - | - | 18 | - |
| After 9 days | - | - | 15,6 | - |
| After 11 days | 4,7 | 9,6 | - | 16 |
| After 13 days | - | - | 14,6 | - |
| After 19 days | 9,8 | 6,2 | - | 22,5 |
| After 22 days | - | - | 15 | - |
| After 27 days | 8,7 | 5,8 | - | 24 cf |
| After 28 days | - | - | 14,6 | - |

Thus it has been found surprisingly that the generally accepted inferiority of SBS formulations versus SIS formulation can be overcome to a considerable extent by using a tackifier with very specific characteristics.

**Claims**

1. An adhesive formulation for hot melt pressure sensitive adhesives including a styrene-butadiene block copolymer and a petroleum resin produced by copolymerising using a Friedel Crafts catalyst, a mixture of:

    (1) from 40 to 90 wt% of a feed comprising C5 olefins and/or diolefins, and/or C6 olefins and/or diolefins;
    (2) from 10 to 50 wt% of a feed comprising C8-C10 olefinically unsaturated aromatic compounds the wt% being calculated on the basis of the total weight of polymerisable feed components; and having

    (a) a level of aromaticity of from 13 to 45 wt% as determined by proton NMR,
    (b) a softening point of from 50 to 100°C,
    (c) an Mn of from 400 to 900 and an Mz of below 2200 and Mw below 1300 and a ratio of Mw/Mn of from 1.2 to 1.7 (Mn, Mw and Mz being measured by gel permeation chromatography (G.P.C)).

2. An adhesive formulation according to claim 1 comprising from 100 to 200 parts of resin per 100 parts of styrene-butadiene block copolymer and from 0 to 100 parts of a processing oil per 100 parts of styrene-butadiene block copolymer.

3. An adhesive formulation according to claim 1 or claim 2 wherein the resin is hydrogenated.

4. An adhesive formulation according to any of the preceding claims wherein the formulation includes from 125 to 150 parts of resin per 100 parts of the styrene-butadiene block copolymer and from 25 to 50 parts of a processing oil per 100 parts of the styrene butadiene block copolymer.

5. An adhesive formulation according to any of the preceding claims wherein the resin has a softening point of 80 to 90°C.

6. An adhesive formulation according to any of the preceding claims in which the copolymer is selected from linear, radial, multiarm, tapered copolymers having a styrene content of at least 20 wt%, preferably 25 to 45 wt%.

7. A petroleum resin produced by copolymerising using a Friedel Craft analyst, of a mixture comprising

    (1) from 40 to 90 wt% of a feed comprising $C_5$ olefins and/or diolefins, and/or $C_6$ olefins and/or diolefins;
    (2) from 10 to 50 wt% of a feed comprising C8-C10 olefinically unsaturated aromatic compounds and having

    (a) a level of aromaticity of from 13 to 45 wt% as determined by proton NMR,

(b) a softening point of from 50 to 100°C,

(c) an Mn of from 400 to 900 and an Mz of below 2200 and Mw below 1300 and a ratio of Mw/Mn of from 1.2 to 1.7 (Mn, Mw and Mz being measured by gel permeation chromatography (G.P.C.)).

**8.** Use of the petroleum resin of claim 7 for tackification of styrene-butadiene block copolymer.


**Patentansprüche**

**1.** Klebstoff-Formulierung für Schmelz-Haftkleber, die ein Styrol-Butadien-Blockcopolymer und ein Erdölharz einschließt, das durch Copolymerisation einer Mischung von:

(1) 40 bis 90 Gew.-% eines $C_5$-Olefine und/oder -Diolefine und/oder $C_6$-Olefine und/oder -Diolefine umfassenden Einsatzmaterials,

(2) 10 bis 50 Gew.-% eines $C_8$- bis $C_{10}$- olefinisch ungesättigte aromatische Verbindungen umfassenden Einsatzmaterials

unter Verwendung eines Friedel-Crafts-Katalysators hergestellt ist, wobei die Gew.-% auf Basis des Gesamtgewichts polymerisierbarer Einsatzmaterial-Komponenten berechnet werden, und das

(a) eine Aromatizität von 13 bis 45 Gew.-%, bestimmt durch Proton-NMR,

(b) einen Erweichungspunkt von 50 bis 100°C,

(c) ein $M_n$ von 400 bis 900 und ein $M_z$ unter 2200 und ein $M_w$ unter 1300 und ein $M_w/M_n$-Verhältnis von 1,2 bis 1,7 aufweist (wobei $M_n$, $M_w$ und $M_z$ durch Gelpermeations-Chromatographie (GPC) gemessen werden).

**2.** Klebstoff-Formulierung nach Anspruch 1, die 100 bis 200 Teile Harz pro 100 Teile Styrol-Butadien-Blockcopolymer und 0 bis 100 Teile eines Verarbeitungsöls pro 100 Teile Styrol-Butadien-Blockcopolymer umfaßt.

**3.** Klebstoff-Formulierung nach Anspruch 1 oder 2, bei der das Harz hydriert ist.

**4.** Klebstoff-Formulierung nach einem der vorhergehenden Ansprüche, bei der die Formulierung 125 bis 150 Teile Harz pro 100 Teile Styrol-Butadien-Blockcopolymer und 25 bis 50 Teile eines Prozeßöls pro 100 Teile Styrol-Butadien-Blockcopolymer einschließt.

**5.** Klebstoff-Formulierung nach einem der vorhergehenden Ansprüche, bei der das Harz einen Erweichungspunkt von 80 bis 90°C aufweist.

**6.** Klebstoff-Formulierung nach einem der vorhergehenden Ansprüche, bei der das Copolymer aus linearem, radialem, mehrarmig konischem Copolymer mit einem Styrol-Gehalt von mindestens 20 Gew.-%, vorzugsweise 25 bis 45 Gew.-% ausgewählt ist.

**7.** Erdölharz, das durch Copolymerisation einer Mischung umfassend:

(1) 40 bis 90 Gew.-% eines $C_5$-Olefine und/oder -Diolefine und/oder $C_6$-Olefine und/oder -Diolefine umfassenden Einsatzmaterials,

(2) 10 bis 50 Gew.-% eines $C_8$- bis $C_{10}$- olefinisch ungesättigte aromatische Verbindungen umfassenden Einsatzmaterials

unter Verwendung eines Friedel-Crafts-Katalysators hergestellt ist, und das

(a) eine Aromatizität von 13 bis 45 Gew.-%, bestimmt durch Proton-NMR,

(b) einen Erweichungspunkt von 50 bis 100°C,

(c) ein $M_n$ von 400 bis 900 und ein $M_z$ unter 2200 und ein $M_w$ unter 1300 und ein $M_w/M_n$-Verhältnis von 1,2 bis 1,7 aufweist ($M_n$, $M_w$ und $M_z$ werden durch Gelpermeations-Chromatographie (GPC) gemessen).

8. Verwendung des Erdölharzes gemäß Anspruch 7 zum Klebrigmachen von Styrol-Butadien-Blockcopolymer.


## Revendications

1. Formulation d'adhésif pour des adhésifs thermofusibles sensibles à la pression, comprenant un copolymère séquencé styrène-butadiène et une résine de pétrole produite par copolymérisation, au moyen d'un catalyseur de Friedel-Crafts, d'un mélange :

   (1) de 40 à 90 % en poids d'une charge comprenant des oléfines et/ou dioléfines en $C_5$ et/ou des oléfines et/ou dioléfines en $C_6$ ;
   (2) de 10 à 50 % en poids d'une charge comprenant des composés aromatiques à insaturation oléfinique en $C_8$ à $C_{10}$, le pourcentage en poids étant calculé sur la base du poids total des constituants de la charge polymérisable ; et ayant

   (a) un taux d'aromaticité de 13 à 45 % en poids, déterminé par RMN des protons,
   (b) un point de ramollissement de 50 à 100°C,
   (c) une valeur de Mn de 400 à 900, une valeur de Mz inférieure à 2200, une valeur de Mw inférieure à 1300 et un rapport Mw/Mn de 1,2 à 1,7 (les valeurs de Mn, Mw et Mz étant mesurées par chromatographie de perméation sur gel (C.P.G.)).

2. Formulation d'adhésif suivant la revendication 1, comprenant 100 à 200 parties de résine pour 100 parties de copolymère séquencé styrène-butadiène et 0 à 100 parties d'une huile plastifiante pour 100 parties de copolymère séquencé styrène-butadiène.

3. Formulation d'adhésif suivant la revendication 1 ou la revendication 2, dans laquelle la résine est hydrogénée.

4. Formulation d'adhésif suivant l'une quelconque des revendications précédentes, qui comprend 125 à 150 parties de résine pour 100 parties du copolymère séquencé styrène-butadiène et 25 à 50 parties d'une huile plastifiante pour 100 parties du copolymère séquencé styrène-butadiène.

5. Formulation d'adhésif suivant l'une quelconque des revendications précédentes, dans laquelle la résine a un point de ramollissement de 80 à 90°C.

6. Formulation d'adhésif suivant l'une quelconque des revendications précédentes, dans laquelle le copolymère est choisi parmi des copolymères linéaires, radiaux, à bras multiples, effilés, ayant une teneur en styrène d'au moins 20 % en poids, de préférence de 25 à 45 % en poids.

7. Résine de pétrole produite par copolymérisation, au moyen d'un catalyseur de Friedel Crafts, d'un mélange comprenant

   (1) 40 à 90 % en poids d'une charge comprenant des oléfines et/ou dioléfines en $C_5$, et/ou des oléfines et/ou dioléfines en $C_6$ ;
   (2) 10 à 50 % en poids d'une charge comprenant des composés aromatiques à insaturation oléfinique en $C_8$ à $C_{10}$, et ayant

   (a) un taux d'aromaticité de 13 à 45 % en poids, déterminé par RMN des protons,
   (b) un point de ramollissement de 50 à 100°C,
   (c) une valeur de Mn de 400 à 900, une valeur de Mz inférieure à 2200, une valeur de Mw inférieure à 1300 et un rapport Mw/Mn de 1,2 à 1,7 (les valeurs de Mn, Mw et Mz étant mesurées par chromatographie de perméation sur gel (C.P.G.)).

8. Utilisation de la résine de pétrole suivant la revendication 7 pour conférer une adhésivité à un copolymère séquencé styrène-butadiène.